# EUROPÄISCHE PATENTSCHRIFT

(11) **EP 1 134 829 B1**
(45) Veröffentlichungstag und Bekanntmachung des Hinweises auf die Patenterteilung: **11.02.2009**
(21) Anmeldenummer: 01104678.6
(22) Anmeldetag: 24.02.2001
(51) Int. Cl.: H01M 8/06, B60L 11/18

(54) **Verfahren und Vorrichtung zur Verkürzung der Startzeit von CO-Oxidationskatalysatoren in mobilen Brennstoffzellensystemen**
Method and device for decreasing the start time of CO-oxydation catalysts in mobile fuel cell systems
Méthode et dispositif pour réduire le temps de démarrage dans des systèmes mobiles de piles à combustible

(30) Priorität: 14.03.2000 DE 10012224
(43) Veröffentlichungstag der Anmeldung: 19.09.2001
(73) Patentinhaber: NuCellSys GmbH, 73230 Kirchheim/Teck-Nabern (DE)
(72) Erfinder: Röser, Thomas, Dr., 73265 Dettingen/Teck (DE); Saling, Carlo, 73265 Dettingen/Teck (DE); Wolfsteiner, Matthias, 73230 Kirchheim (DE)
(74) Vertreter: Kocher, Klaus-Peter

(56) Entgegenhaltungen:
- EP-A- 0 345 908
- EP-A- 1 148 567
- WO-A-00/16880
- DE-A- 19 850 864
- US-A- 3 966 443
- US-A- 4 838 901
- PATENT ABSTRACTS OF JAPAN vol. 013, no. 026 (E-706), 20. Januar 1989 (1989-01-20) & JP 63 228572 A (SANYO ELECTRIC CO LTD), 22. September 1988 (1988-09-22)

## Beschreibung

Die Erfindung betrifft ein Verfahren zur Verkürzung der Startzeit eines CO-Oxidationskatalysators in Fahrzeugen mit integrierter Brennstoffzelle während des Kaltstarts.

Nach dem Betrieb eines Fahrzeuges mit integriertem Brennstoffzellensystem kondensieren H₂O und Brennstoff, z.B. Methanol, aus dem Reformatgas des Gaserzeugungssystems auf der Oberfläche (z.B. Platin) des CO-Oxidationskatalysators aufgrund der Abkühlung des Reformatgases aus. Zusätzlich kommt es nach dem Betrieb des Fahrzeuges zu einer Belegung des CO-Oxidationskatalysators mit CO durch Chemisorption. Dadurch werden die Poren und aktiven Zentren auf der Oberfläche des CO-Oxidationskatalysators belegt. Die Folge ist, je nach Bedekkungsgrad der Katalysatoroberfläche mit diesen Gasbestandteilen, eine Anhebung des Zündtemperaturniveaus des Katalysators, wodurch beim Kaltstart die Startzeit des Katalysators verlängert wird. Im Extremfall kann sogar das Zünden verhindert werden. Im Falle des Wassers kann es bei tiefen Temperaturen zu einer Vereisung des Katalysators kommen.

Die japanische Patentanmeldung JP 63228572 A offenbart ein Brennstoffzellensystem mit Reformer. Um die Kaltstartzeit des Brennstoffzellensystems zu reduzieren, wird das Reformatgas vor Eintritt in die Brennstoffzellen durch einen Verteiler am Brennstoffzelleneingang geleitet, wobei der Verteiler ein Feuchtigkeits- und ein CO-Adsorbermaterial enthält, durch die das Reformatgas hindurch strömen muss.

Das amerikanische Patent US 4,838,901 A offenbart einen Adsorber, der ein Außengehäuse, ein durchgängiges, perforiertes Rohr zur Führung eines zu reinigenden Fluids und Adsorbermaterial aufweist. Das zu reinigende Fluid, beispielsweise mit Schadstoffen belastete Luft, wird während des Betriebs des Adsorbers durch das Adsorptionsmaterial hindurch geleitet. Der Adsorber wird beispielsweise zur Reinigung der Zuluft von Fahrzeugen eingesetzt, die extremen Umgebungsbedingungen ausgesetzt sein können.

Das amerikanische Patent US 3,966,443 A offenbart einen Adsorber, der durch ein Außengehäuse begrenzt und mit mindestens einem durchgängigen Rohr zur Führung eines Gases ausgestattet ist. Der Raum zwischen Außengehäuse und Rohr ist mit einem Adsorbermaterial befüllt und das Rohr innerhalb des Außengehäuses ist perforiert ausgeführt. Der Adsorber wird zur Reinigung der Abgase von Verbrennungsmotoren eingesetzt.

Aufgabe der Erfindung ist es daher, ein Verfahren zu schaffen, mit dem die Belegung der Poren und aktiven Zentren der Katalysatoroberfläche mit startverzögernden Gasbestandteilen nach dem Abschalten des Fahrzeuges zuverlässig vermindert oder ganz vermieden werden kann.

Diese Aufgabe wird durch den Gegenstand des Anspruches 1 gelöst. Vorteilhafte Ausführungen sind Gegenstand weitere Ansprüche.

Erfindungsgemäß werden mittels eines Adsorbers während der Abkühlungsphase, nach Abschalten des Fahrzeuges, startverzögernde Gasbestandteile aus dem Reformatgas des Gaserzeugungssystems entfernt. Adsorbiert werden kondensierende Bestandteile wie z.B. Wasser oder Brennstoff, z.B. Methanol, sowie CO.

Beim nächsten Kaltstart ist somit die Oberfläche des CO-Oxidationskatalysators frei von derartigen startverzögernden Bestandteilen. Es wird dadurch eine Verkürzung der Startzeit des CO-Oxidationskatalysators als auch eine Verminderung der CO-Emission erreicht.

Gemäß der Erfindung werden die startverzögernden Gasbestandteile nach Abschalten des Fahrzeuges aus dem Reformatgas durch Adsorption abgereichert. Der Transport der zu adsorbierenden Gasbestandteile aus dem Reformatgas an den Adsorber erfolgt insbesondere über Diffusionsprozesse. Zur Beschleunigung dieser Transportprozesse kann vor dem Adsorber Sekundärluft zudosiert werden. Somit kann eine Belegung der Oberfläche des CO-Oxidationskatalysators mit H₂O, Brennstoff, z.B. Methanol, und CO bei Abkühlung des Reformatgases vermindert werden. Eine effektive Adsorption der Gasbestandteile kann insbesondere durch folgende Eigenschaften des Adsorbers und des Adsorbermaterials erreicht werden:
- geeignete Adsorptionsisotherme für die zu adsorbierenden Stoffe, d.h. das Adsorbermaterial besitzt z.B. eine hohe Selektivität sowie Affinität zu H₂O, z.B. ein Zeolith mit hydrophilen Eigenschaften (Molekularsieb 13X).
- durch Vergrößerung der Kontaktfläche zwischen Reformatgas und Adsorber werden eine schnellere Desorptionskinetik (insbesondere während der Betriebsphase) und eine schnellere Adsorptionskinetik (während der Abkühlungsphase nach Abschalten des Fahrzeuges) erreicht.
- bereits bei Temperaturen oberhalb des Taupunktes des Reformatgases (typischerweise 80 - 85 °C, bei λ(Wasser)=1,3) ist eine hohe Beladungskapazität des Adsorbermaterials verfügbar.
- das Adsorbermaterial weist eine hohe Fließfähigkeit auf, um eine Verklumpung des Adsorbermaterials bei hoher Beladung zu verhindern.
- das Adsorbermaterial weist eine hohe Schüttdichte (Durchmesser der eingesetzten Pellets kleiner als 2 mm) sowie eine hohe Porosität auf.
- das Adsorbermaterial weist eine hohe mechanische Stabilität auf. Insbesondere sollten Partikelfraktionen durch Abrieb vermieden werden.

In einer erfindungsgemäßen Ausführung wird der Adsorber im Brennstoffzellensystem stromabwärts zu dem CO-Oxidationskatalysator angeordnet. Hierbei ist zu berücksichtigen, dass im Reformer, an dem das Reformatgas erzeugt wird, eine stark exotherme Reaktion abläuft und somit das Reformatgas an dieser Stelle stark aufgeheizt wird. Dadurch bildet sich vom Reformer über den CO-Oxidationskatalysator zum nachgeschalteten Adsorber ein Temperaturgefälle aus. In der Abkühlphase nach Abschalten des Fahrzeuges liegt der Adsorber weiterhin auf einem niedrigeren Temperaturniveau als der CO-Oxidationskatalysator, wodurch eine höhere Beladung des Adsorbers mit startverzögernden Gasbestandteilen möglich ist. Um die Temperaturdifferenz zwischen Adsorber und CO-Oxidationskatalysator weiter zu verbessern, kann der Adsorber aktiv als auch passiv gekühlt werden.

Bei angemessener Kühlung kann der Adsorber in einer weiteren erfindungsgemäßen Anordnung jedoch auch stromaufwärts zu dem CO-Oxidationskatalysator angeordnet werden.

Zur Erlangung einer hohen Adsorptionsausbeute am Adsorber kann der Reformer darüber hinaus auch thermisch isoliert werden.

Der Adsorber kann während der Betriebsphase des Fahrzeuges desorbiert werden. Hierbei wird der Adsorber bis auf das Feuchtigkeitsniveau des Reformatgases desorbiert. Die dabei einsetzenden Desorptionsprozesse sind bei Temperaturen des Reformatgases unterhalb von 100 °C vorwiegend Verdrängungsdesorption (durch z.B. CO₂) und thermische Desorption.

Zur schnelleren und effektiveren Desorption des Adsorbers kann während der Betriebsphase des Fahrzeuges vor dem Adsorber erfindungsgemäß Luft, z.B. Kompressorluft aus einer Luftdosierstelle zudosiert werden. Die Desorption kann jedoch auch nach dem Abschalten des Fahrzeuges erfolgen, bevorzugt unmittelbar nach dem Abschalten des Fahrzeuges, bevor der CO-Oxidationsreaktor den Taupunkt erreicht hat. Hierzu kann dem Reformatgas ebenfalls Luft zudosiert werden.

Es wird ein Adsorber eingesetzt, der durch ein Außengehäuse begrenzt ist, durch welches ein durchgängiges, in einer bevorzugten Ausführung zylindrisches Rohr angeordnet ist, in dem das Reformatgas strömt. Der Raum zwischen Außengehäuse und Rohr ist mit dem Adsorbermaterial gefüllt. Der sich innerhalb des Außengehäuses befindliche Teil des Rohrs ist perforiert ausgeführt. Hierbei kann z.B. ein Maschendraht eingesetzt werden. Der Durchmesser der Perforation muss dabei kleiner sein als der Durchmesser des als Schüttgut vorliegenden Adsorbermaterials. Vorteilhaft an dem beschriebenen Adsorber ist es, dass es bei seinem Einsatz zu keinem oder nur zu einem sehr geringen Druckabfall im Reformatstrom kommt. Außerdem wird durch die erfindungsgemäße Trennung des Rohrs und des Adsorbermaterials der mechanische Abrieb des Adsorbermaterials minimiert.

In einer vorteilhaften Ausführung kann über Verwindungen des Rohrs die Verweildauer des Reformatgases innerhalb des Adsorbers verlängert werden. Auch kann durch eine Strukturierung der Oberfläche des Rohrs die Austauschoberfläche zwischen Gas und Adsorbermaterial erhöht werden. Dadurch kommt es zu einer höheren Adsorptionsausbeute der startverzögernden Gasbestandteile aus dem Reformatgas.

Weitere Vorteile und vorteilhafte Ausgestaltungen der Erfindung gehen aus der folgenden Beschreibung unter Bezugnahme auf Zeichnungen hervor. Es zeigen:
Fig. 1: den Verschaltungsaufbau eines erfindungsgemäßen Adsorbers im Gasfluss eines Brennstoffzellensystems;
Fig. 2: den Aufbau eines erfindungsgemäßen Adsorbers;

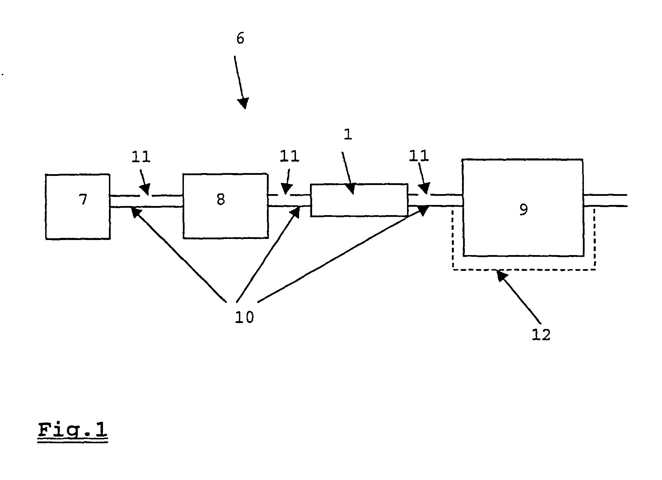

In Fig. 1 ist die Anordnung des Adsorbers **1** im Gasfluss des Brennstoffzellensystems **6** gezeigt. Das Brennstoffzellensystem **6** umfasst ein Gaserzeugungssystem **7** zur Erzeugung des Reformatgases, einen CO-Oxidationskatalysator **8** zur Oxidation des CO aus dem Reformatgas sowie eine Brennstoffzelle **9**. Stromabwärts zum CO-Oxidationskatalysator ist der erfindungsgemäße Adsorber **1** angeordnet. An den Zuleitungen **10** ist jeweils eine Öffnung **11** vorgesehen, durch die dem Reformatgas Luft zudosiert werden kann.

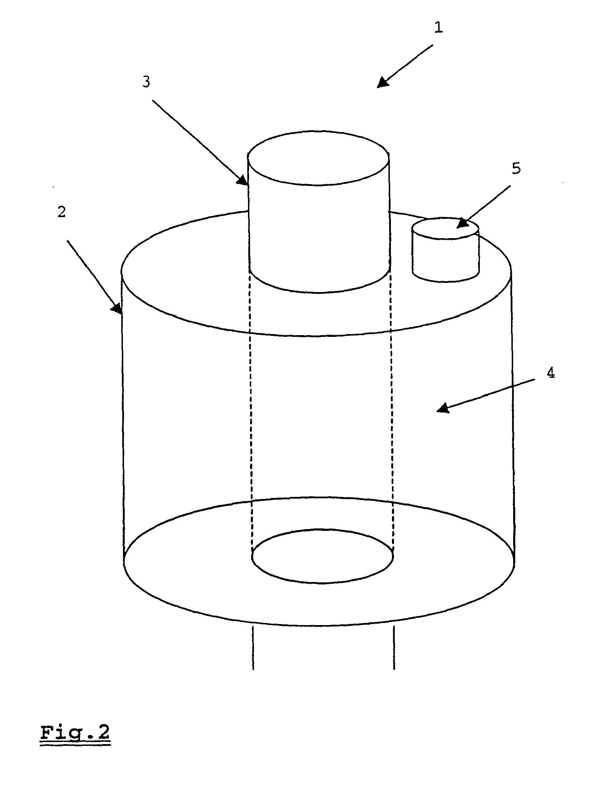

Der Adsorber **1,** wie er in einem erfindungsgemäßen Verfahren vorteilhaft eingesetzt werden kann, besteht gemäß Fig. **2** aus einem Außengehäuse **2** mit einem durchgängigen zylindrischen Rohr **3,** wobei aus Gründen der Übersichtlichkeit der sich im Inneren des Außengehäuses **2** befindliche Teil des Rohrs **3** gestrichelt angedeutet ist. In dem Raum zwischen dem Außengehäuse **2** und dem zylindrischen Rohr **3** befindet sich das Adsorbermaterial **4.** Zur Befüllung der Adsorber **1** mit dem Adsorbermaterial **4** dient ein Rohrstutzen **5,** der am Außengehäuse **2** des Adsorbers **1** angeordnet ist. Durch Fig. 2 wird die Position des Rohrstutzens nicht beschränkt.

Während der Betriebsphase strömt das Reformatgas durch die Zuleitung **10** in den CO-Oxidationskatalysator **8.** Von dort strömt es über die Zuleitung **10** durch den Adsorber **1** in die Brennstoffzelle **9.** Aufgrund der vergleichsweise hohen Temperatur des Reformatgases während der Betriebsphase wird der Adsorber **1** desorbiert, wobei der Feuchtigkeitsgehalt des Adsorbermaterials **4** durch Desorptionsprozesse an den Feuchtigkeitsgehalt des Reformatgases angepasst wird. Durch eine oder mehrere Öffnungen **11** kann dem Reformatgas zusätzliche Sekundärluft zugeführt werden, wodurch sich die Desorptionsprozesse beschleunigen lassen.
Nach Abschalten des Fahrzeuges wird die Brennstoffzelle **9** von dem Gasfluss entkoppelt, das Gas gelangt somit durch den Bypass **12.** Da der Adsorber **1** weiter entfernt ist von dem heißen Gaserzeugungssystem als der CO-Oxidationskatalysator **8,** stellt der Adsorber **1** eine Temperatursenke dar, an dem es zu Kondensationseffekten und Ablagerungen der startverzögernden Gasbestandteile kommt, bevor sich diese auf dem CO-Oxidationskatalysator **8** niederschlagen können. Dieser Effekt kann durch aktive oder passive Kühlung des Adsorbers **1** noch verstärkt werden.
Die startverzögernden Gasbestandteile werden im Reformatstrom vorwiegend durch Diffusionsprozesse zum Adsorber **1** transportiert. Mittels zusätzlicher Lufteinspeisung durch die Öffnungen **11** wird die Strömungsgeschwindigkeit in den Zuleitungen **10** vergrößert, wodurch die Transportprozesse beschleunigt werden.
Beim Kaltstart wird somit aufgrund der geringen Belegung der Poren und aktiven Zentren auf der Oberfläche des CO-Oxidationskatalysators **8** mit startverzögernden Gasbestandteilen das Niveau der Zündtemperatur des CO-Oxidationskatalysators **8** schneller erreicht. Ferner wird beim Kaltstart durch die geringe Belegung des CO-Oxidationskatalysators **8** die CO-Emission reduziert.

Die Brennstoffzelle **9** bleibt vorteilhaft während des Kaltstarts vom Gasfluß abgekoppelt (Reformatgas strömt durch Bypass **12**) und wird erst bei temperiertem CO-Oxidationskatalysator **8** wieder in den Gasfluß des Reformatgases geschaltet.

## Patentansprüche

1. Verfahren zur Verkürzung der Kaltstartzeit eines CO-Oxidationskatalysators (**8**) für Reformatgas aus einem Gaserzeugungssystem (**7**) eines Brennstoffzellensystems (**6**) in einem Fahrzeug, **dadurch gekennzeichnet, dass**
das Reformatgas während des Betriebs des Fahrzeugs durch einen Adsorber (**1**) hindurch, an einem Zeolith als Adsorbermaterial vorbei geleitet wird;
und nach Abschalten des Fahrzeugs mit dem Adsorber (**1**) durch Adsorption an dem Zeolith kondensierende Bestandteile des Reformatgases sowie CO aus dem Reformatgas entfernt werden.

2. Verfahren nach Anspruch 1, **dadurch gekennzeichnet, dass** der Adsorber (**1**) stromabwärts zu dem CO-Oxidationskatalysator (**8**) angeordnet wird.

3. Verfahren nach Anspruch 1, **dadurch gekennzeichnet, dass** der Adsorber (**1**) stromaufwärts zu dem CO-Oxidationskatalysator (**8**) angeordnet wird.

4. Verfahren nach einem der vorangehenden Ansprüche, **dadurch gekennzeichnet, dass** zur Adsorption des Adsorbers (**1**) dem Reformatgas zusätzliche Luft zudosiert wird.

5. Verfahren nach einem der vorangehenden Ansprüche, **dadurch gekennzeichnet, dass** der Adsorber (**1**) gekühlt wird.

6. Verfahren nach einem der vorangehenden Ansprüche, **dadurch gekennzeichnet, dass** der Reformer (**7**), an dem das Reformatgas erzeugt wird, thermisch isoliert ist.

7. Verfahren nach einem der vorangehenden Ansprüche, **dadurch gekennzeichnet, dass** der Adsorber (**1**) in der Betriebsphase des Fahrzeuges und/oder unmittelbar nach Abschalten des Fahrzeugs desorbiert wird.

8. Verfahren nach Anspruch 7, **dadurch gekennzeichnet, dass** zur Desorption des Adsorbers (**1**) dem Reformatgas zusätzliche Luft zudosiert wird.

9. Verfahren nach einem der vorangehenden Ansprüche, **dadurch gekennzeichnet, dass** die an dem Adsorber (**1**) adsorbierten startverzögernden Gasbestandteile einer oder mehrere der folgenden Stoffe sind: CO, Wasser, Brennstoff, z.B. Methanol.

10. Brennstoffzellensystem mit einem Adsorber (**1**) zum Einsatz bei dem Verfahren nach einem der vorangehenden Ansprüche, **dadurch gekennzeichnet, dass** der Adsorber (**1**) durch ein Außengehäuse (**2**) begrenzt und mit mindestens einem durchgängigen Rohr (**3**) zur Führung des Reformatgases ausgeführt ist, wobei der Raum zwischen Außengehäuse (**2**) und Rohr (**3**) mit dem Adsorbermaterial (**4**) befüllt ist und das Rohr (**3**) innerhalb des Außengehäuses (**2**) perforiert ausgeführt ist.

## Claims

1. Method for shortening the cold starting time of a CO oxidation catalytic converter (8) for reformate gas from a gas generation system (7) of a fuel cell system (6) in a vehicle, **characterized in that** the reformate gas is fed through an adsorber (1), past a zeolith as adsorber material while the vehicle is operating; and
components of the reformate gas and of CO which condense on the zeolith are removed from the reformate gas with the adsorber (1) by adsorption after the vehicle has been switched off.

2. Method according to Claim 1, **characterized in that** the adsorber (1) is arranged downstream of the CO oxidation catalytic converter (8).

3. Method according to Claim 1, **characterized in that** the adsorber (1) is arranged upstream of the CO oxidation catalytic converter (8).

4. Method according to one of the preceding claims, **characterized in that** additional air is metered into the reformate gas for the adsorption of the adsorber (1).

5. Method according to one of the preceding claims, **characterized in that** the adsorber (1) is cooled.

6. Method according to one of the preceding claims, **characterized in that** the reformer (7) at which the reformate gas is generated is thermally insulated.

7. Method according to one of the preceding claims, **characterized in that** the adsorber (1) is desorbed in the operating phase of the vehicle and/or directly after the vehicle is switched off.

8. Method according to Claim 7, **characterized in that** additional air is metered into the reformate gas for the desorption of the adsorber (1).

9. Method according to one of the preceding claims, **characterized in that** the gas components which delay the start and which are adsorbed at the adsorber (1) are one or more of the following substances: CO, water, fuel, for example methanol.

10. Fuel cell system with an adsorber (1) for use in the method according to one of the preceding claims, **characterized in that** the adsorber (1) is bounded by an outer casing (2) and is embodied with at least one pipe (3) passing through it for conducting the reformate gas, the space between the outer casing (2) and the pipe (3) being filled with the adsorber material (4) and the pipe (3) being perforated inside the outer casing (2).

## Revendications

1. Procédé pour réduire le temps de démarrage à froid d'un catalyseur d'oxydation de CO (8) pour un gaz reformé provenant d'un système de production de gaz (7) d'un système de pile à combustible (6) dans un véhicule, **caractérisé en ce que**
le gaz reformé est conduit, pendant le fonctionnement du véhicule, à travers un adsorbeur (1) le long d'une zéolithe constituant la matière adsorbante;
et, après l'arrêt du véhicule, des composants du gaz reformé se condensant avec l'adsorbeur (1) par adsorption sur la zéolithe ainsi que du CO sont éliminés hors du gaz reformé.

2. Procédé selon la revendication 1, **caractérisé en ce que** l'adsorbeur (1) est disposé en aval du catalyseur d'oxydation de CO (8).

3. Procédé selon la revendication 1, **caractérisé en ce que** l'adsorbeur (1) est disposé en amont du catalyseur d'oxydation de CO (8).

4. Procédé selon l'une quelconque des revendications précédentes, **caractérisé en ce que** l'on ajoute de l'air supplémentaire dosé au gaz réformé pour l'adsorption de l'adsorbeur (1).

5. Procédé selon l'une quelconque des revendications précédentes, **caractérisé en ce que** l'adsorbeur (1) est refroidi.

6. Procédé selon l'une quelconque des revendications précédentes, **caractérisé en ce que** le reformeur (7), dans lequel le gaz reformé est produit, est isolé thermiquement.

7. Procédé selon l'une quelconque des revendications précédentes, **caractérisé en ce que** l'adsorbeur (1) est désorbé pendant la phase de fonctionnement du véhicule et/ou immédiatement après l'arrêt du véhicule.

8. Procédé selon la revendication 7, **caractérisé en ce que** l'on ajoute de l'air supplémentaire dosé au gaz reformé pour la désorption de l'adsorbeur (1).

9. Procédé selon l'une quelconque des revendications précédentes, **caractérisé en ce que** les composants gazeux de retardement de démarrage, adsorbés sur l'adsorbeur (1), sont constitués par une ou plusieurs des substances suivantes: CO, eau, combustible, par exemple méthanol.

10. Système de pile à combustible avec un adsorbeur
(1) à utiliser dans un procédé selon l'une quelconque des revendications précédentes, **caractérisé en ce que** l'adsorbeur (1) est délimité par un boîtier extérieur
(2) et est réalisé avec au moins un tube traversant (3) pour le.guidage du gaz reformé, dans lequel l'espace entre le boîtier extérieur (2) et le tube (3) est rempli de la matière adsorbante (4) et le tube (3) est perforé à l'intérieur du boîtier extérieur (2).
